# EUROPEAN PATENT APPLICATION

(11) **EP 2 148 333 A2**
(43) Date of publication of application: **27.01.2010**
(21) Application number: 09165981.3
(22) Date of filing: 21.07.2009
(51) Int. Cl.: G11B 27/034, H04L 12/28, H04N 5/222, H04N 7/24

(54) **Audiovisual processing system, audiovisual processing apparatus, and audiovisual processing method**

(30) Priority: 24.07.2008 JP 2008190809
(71) Applicant: Kabushiki Kaisha Toshiba, Minato-ku, Tokyo 105-8001 (JP)
(72) Inventor: Osaki, Yoshiro, Tokyo 105-8001 (JP); Ushio, Yasuyuki, Tokyo 105-8001 (JP)
(74) Representative: HOFFMANN EITLE

(57) **Abstract**

Audiovisual processing apparatuses (100) which records and edits audiovisual data and an connection network (4) are provided. The audiovisual processing apparatus (100) includes an external resource manager (91) which obtains information on at least one external device and store the obtained information in an external resource table (93), a data modifier (95) which attaches control information for controlling the external device to internal audiovisual data when the internal audiovisual data is sent to the external device and separates control information from external audiovisual data when the external audiovisual data from the external device is received.

## Description

The present invention relates to an audiovisual processing system, an audiovisual processing apparatus, and an audiovisual processing method for simultaneously executing a plurality of processes such as recording, reproducing and editing audiovisual data in parallel.

Digitalization in broadcasting has progressed due to developments of terrestrial digital broadcasting and cooperation between communication and broadcasting. Conventionally, a magnetic tape is used for storing image/audio materials. However, an audiovisual processing apparatus which employs a semiconductor memory device (e.g., flash memory) is now provided owing to the progress in the digitalization and price-reduction of the flash memory. The flash memory is one example of rewritable nonvolatile semiconductor memory devices. It is advantageous that high-speed random access is possible in the flash memory. In addition, the flash memory includes no mechanically movable portion and has high vibration resistance, differently from the tape or an optical disk drive.

A multitask environment in which multiple recording and reproducing processes are simultaneously executed can not be realized in a conventional system that uses the magnetic tape as a recording medium. However, usage of the flash memory promotes realization of the multitask environment. In the case where multiple processes can be simultaneously executed, editing audiovisual data which is being recorded can be started from a point where the recording is completed. In addition, while recording the audiovisual data, another material which is already recorded can be reproduced, or another audiovisual data can be edited. Therefore, processing time can be shortened and a broadcasting program can be effectively produced and edited.

Accordi:ng to the multitask environment, not only can the audiovisual processing be executed in one audiovisual processing apparatus, but also a system in which a plurality of audiovisual processing apparatuses cooperate can be constructed. The audiovisual processing apparatuses are connected to each other via a data bus, a data switch, or a network. The audiovisual processing apparatuses may include a nonlinear editing apparatus. For example, to edit audiovisual data with a conventional nonlinear editing apparatus, an audiovisual processing apparatus records audiovisual data on a magnetic tape and the tape is carried to the nonlinear editing apparatus or the file of the data is transferred via a network to the nonlinear editing apparatus. Then, the audiovisual data is stored in the nonlinear editing apparatus and edited. The resulting audiovisual data is transferred via the network or a storage medium. However, in the case where the audiovisual processing apparatuses are connected to each other, the audiovisual data can be edited by the non linear editing apparatus without carrying the magnetic tape or transferring the file via the network.

A technique that the nonlinear editing apparatus which is connected to material servers edits a broadcasting program is disclosed in Jpn. Pat. Appln. KOKAI Publication NO. 2000-83192.

However, according to the technique, multitask environment cannot be realized as a system even though the nonlinear editing apparatus and the material servers are connected. Further devices such as a control apparatus, e.g., an asset manager and an interface to convert the audiovisual data into a standard format should be additionally prepared.

An object of the invention is to provide an audiovisual processing system, an audiovisual processing apparatus, and an audiovisual processing method for executing multitask processes between connected processing apparatuses.

According to an embodiment of the present invention, an audiovisual processing system comprises:
audiovisual processing apparatuses configured to record and edit audiovisual data which includes at least one of audio data and image data; and
a connection network configured to connect the audiovisual processing apparatuses,
each of the audiovisual processing apparatuses comprising
an own device configured to process internal audiovisual data,
an external resource table configured to store identification information of at least one external apparatus including at least one of the audiovisual processing apparatuses,
a grouping unit configured to determine wether or not the external apparatus is communicable with the audiovisual processing apparatus via the connection network, and to group the external apparatus together with the audiovisual processing apparatus when it is determined that the external apparatus is communicable with the audiovisual processing apparatus,
a commending unit configured to give a command to the external apparatus in response to an operation input made by a user,
an external resource manager configured to obtain information on at least one external device and store the obtained information in the external resource table, the external device processing audiovisual data and being controlled by the external apparatus
a data transfer controller configured to control sending and receiving data to and from the external device in response to the command from the commanding unit,
a data modifier configured to attach control information for controlling the external device to the internal audiovisual data when the data transfer controller sends the internal audiovisual data to the external device, and configured to separate control information from external audiovisual data sent from the external device when the data transfer controller receives the external audiovisual data from the external device, and
an device controller configured to provide the external audiovisual data for the own device.

According to another embodiment of the present invention, an audiovisual processing apparatus for use in an audiovisual processing system including audiovisual processing apparatuses configured to record and edit audiovisual data which includes at least one of audio data and image data and a connection network configured to connect the audiovisual processing apparatuses, the audiovisual processing apparatus comprises
an own device configured to process internal audiovisual data;
an external resource table configured to store identification information of at least one external apparatus including at least one of the audiovisual processing apparatuses;
a grouping unit configured to determine whether or not the external apparatus is communicable with the audiovisual processing apparatus via the connection network, and to group the external apparatus together with the audiovisual processing apparatus when it is determined that the external apparatus is communicable with the audiovisual processing apparatus;
a commanding unit configured to give a command to the external apparatus in response to an operation input made by a user;
an external resource manager configured to obtain information on at least one external device and store the obtained information in the external resource table, the external device processing audiovisual data and being controlled by the external apparatus;
a data transfer controller configured to control sending and receiving data to and from the external device in response to the command from the commanding unit;
a data modifier configured to attach control information for controlling the external device to the internal audiovisual data when the data transfer controller sends the internal audiovisual data to the external device, and configured to separate control information from external audiovisual data sent from the external device when the data transfer controller receives the external audiovisual data from the external device; and
an device controller configured to provide the external audiovisual data for the own device.

According to another embodiment of the present invention, an audiovisual processing method for use in an audiovisual processing system including audiovisual processing apparatuses configured to record and edit audiovisual data which includes at least one of audio data and image data, and a connection network configured to connect the audiovisual processing apparatuses, the method comprises:
determining whether or not the at least one audiovisual processing apparatus operates as a commanding apparatus which gives a command to at least one external apparatus including at least one of the audiovisual processing apparatuses;
determining whether or not the external apparatus is communicable with the commanding apparatus via the connection network;
grouping the external apparatus together with the commanding apparatus when it is determined that the external apparatus is communicable with the commanding apparatus; and
giving a command from the commanding apparatus to the external apparatus in response to an operation input made by a user,
wherein the external apparatus performs audiovisual processing corresponding to the command from the commanding apparatus.

According to another embodiment of the present invention, a computer-readable program recording medium for use with an audiovisual processing system including audiovisual processing apparatuses configured to record and edit audiovisual data which includes at least one of audio data and image data and a connection network configured to connect the audiovisual processing apparatuses, each of the audiovisual apparatuses comprising an own device configured to process internal audiovisual data and an external resource table configured to store identification information of at least one external apparatus including at least one of the audiovisual processing apparatuses, the recording medium containing program instructions for causing the audiovisual processing apparatus to:
determine whether or not the external apparatus is communicable with the audiovisual processing apparatus via the connection network
group the external apparatus together with the audiovisual processing apparatus when it is determined that the external apparatus is communicable with the audiovisual processing apparatus,
give a command to the external apparatus in response to an operation input made by a user,
obtain information on at least one external device and store the obtained information in the external resource table, the external device processing audiovisual data and being controlled by the external apparatus,
control sending and receiving data to and from the external device in response to the command,
attach control information for controlling the external device to the internal audiovisual data when the internal audiovisual data is controlled to be sent to the external device,
separate control information from external audiovisual data when the external audiovisual data sent from the external device is received, and
provide the external audiovisual data for the own device.

The invention can be more fully understood from the following detailed description when taken in conjunction with the accompanying drawings, in which:
FIG. 1 is a schematic view of an audiovisual processing system according to a first embodiment of the present invention;
FIG. 2 is a block diagram of an audiovisual processing apparatus according to an embodiment of the present invention;
FIG. 3 shows an own resource table according to an embodiment of the invention;
FIG. 4 shows an external resource table according to an embodiment of the invention;
FIG. 5 is a sequence diagram showing whole operation of the audiovisual processing system according to the first embodiment;
FIG. 6 is a schematic view of an audiovisual processing system according to a second embodiment of the invention;
FIG. 7 is a sequence diagram showing whole operation of the audiovisual processing system according to the second embodiment;
FIG. 8 is a schematic view of an audiovisual processing system according to a third embodiment of the invention;
FIG. 9 is a sequence diagram showing whole operation of the audiovisual processing system according to the third embodiment;
FIG. 10 is a schematic view of an audiovisual processing system according to a fourth embodiment of the invention;
FIG. 11 is a sequence diagram showing whole operation of the audiovisual processing system according to the fourth embodiment;
FIG. 12 is a schematic view of an audiovisual processing system according to a fifth embodiment of the invention;
FIG. 13 is a sequence diagram showing whole operation of the audiovisual processing system according to the fifth embodiment;
FIG. 14 is a schematic view of an audiovisual processing system according to a sixth embodiment of the invention;
FIG. 15 is a block diagram of an audiovisual processing apparatus according to the sixth embodiment; and
FIG. 16 is a sequence diagram showing whole operation of the audiovisual processing system according to the sixth embodiment.

Embodiments of an audiovisual processing system according to the present invention will now be described with reference to the accompanying drawings.

### First embodiment

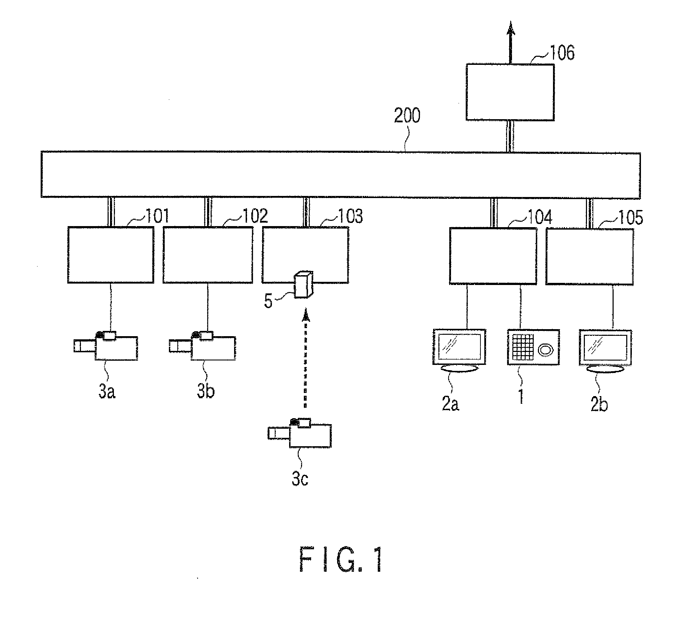

FIG. 1 shows an example of the audiovisual processing system according to the present embodiment.

The audiovisual processing system includes audiovisual processing apparatuses 101, 102, 103, 104, 105 and 106 and an external switch 200. The audiovisual processing apparatuses 101 to 106 have the same configuration as an audiovisual processing apparatus 100 which will be described later. In the present embodiment, the audiovisual processing apparatuses are denoted by reference numerals 101 to 106 for illustrative purposes. Each of the audiovisual processing apparatuses 101 to 106 includes a network controller 90 and a network interface 95 and is connected to the external switch 200 using the network controller 90 and the network interface 95. The audiovisual processing apparatuses 101 to 106 are connected to each other via the external switch 200. Since the audiovisual processing apparatuses 101 to 106 include the same network controllers 90 and the network interfaces 95, the audiovisual processing system in which the same audiovisual processing apparatuses are connected can be constructed without preparing an external interface unit which converts audiovisual data into a standard format. Thus, the audiovisual processing function can be realized only by connecting the audiovisual processing apparatuses to the external switch 200 or a public network 400 which will be described later.

The audiovisual processing apparatuses 101 to 106 having the same configurations can be classified into two groups. One is a commanding apparatus which stores information on communication resources and communication bands for the audiovisual processing apparatuses 101 to 106, controls sending and receiving audiovisual data (including at least one of moving image data, still image data, and audio data), and gives a command to other audiovisual processing apparatuses under instructions input from an operating unit 20 or an operating device 1. The other group includes dependent apparatuses which operate under the command from the commanding apparatus.

In the audiovisual processing system according to the present embodiment, at least one audiovisual processing apparatus operates as the commanding apparatus, and the other apparatuses operate as the dependent apparatuses. In the first embodiment, the audiovisual processing apparatus 104 to which the operating device 1 is connected operates as the commanding apparatus, and the audiovisual processing apparatuses 101, 102, 103, 105 and 106 operate as the dependent apparatuses. Decision of the commanding apparatus is made manually at the time of constructing the audiovisual processing system.

The operating device 1 is utilized by a user to give instructions to process audiovisual data and may include a keyboard, a mouse, a jog-dial, an operational switch, a remote controller and the like.

An audiovisual processing apparatus to which the operating device 1 is connected may determine that the apparatus itself is the commanding apparatus by reference to an own resource manager 10a at the time of constructing the audiovisual processing system.

A camera 3a is connected to the audiovisual processing apparatus 101. A camera 3b is connected to the audiovisual processing apparatus 102. An external memory 5 stores audiovisual data captured by a camera 3c and is connected to the audiovisual processing apparatus 103. An external display device 2a and the operating device 1 are connected to the audiovisual processing apparatus 104. An external display device 2b is connected to the audiovisual processing apparatus 105.

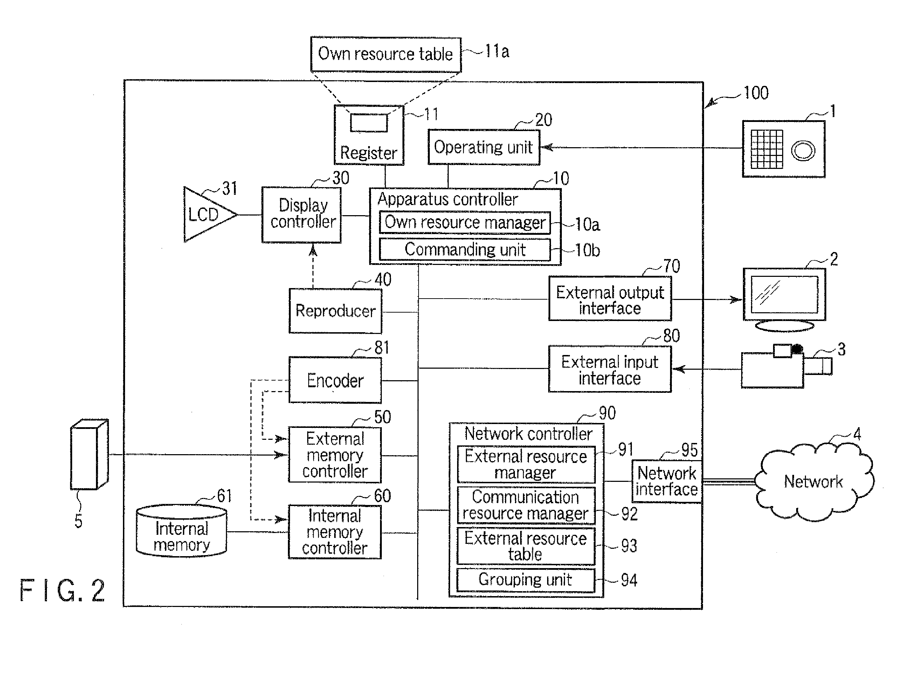

The external display devices 2a and 2b (represented by a display device 2 in FIG. 2) may include a liquid crystal display, a plasma display panel or another display device which can display reproduced audiovisual data. The external display devices 2a and 2b may output audio data if necessary.

The cameras 3a, 3b and 3c (represented by a camera 3 in FIG. 2) may include a digital camera which uses a charge coupled device or a CMOS image sensor. The cameras 3a, 3b and 3c may capture audio data if necessary.

The external switch 200 may include a data switching network or a switching hub to control data transmission paths.

FIG. 2 is a block diagram showing a configuration of the audiovisual processing apparatuses in the audiovisual processing system of FIG. 1, according to an embodiment of the present invention.

The audiovisual processing apparatus 100 (representative of the audiovisual processing apparatuses 101 to 106) includes an apparatus controller 10, a register 11, an operating unit 20, a display controller 30, a display device 31, a data reproducer 40, an external memory controller 50, an internal memory controller 60, an internal memory 61, an external output interface 70, an external input interface 80, a data encoder 81, a network controller 90, and a network interface 95.

The apparatus controller 10 is connected to the register 11, operating unit 20, display controller 30, data reproducer 40, external memory controller 50, internal memory controller 60, external output interface 70, external input interface 80, data encoder 81 and network controller 90. The register 11 stores control information for the units in the audiovisual processing apparatus 100. The register 11 includes an own resource table 11a which stores information on usage statuses of the units and devices in the apparatus 100 (device resources) and communication resources of the apparatus 100. The apparatus controller 10 includes the own resource manager 10a which obtains information on the device resources and stores the information on the device resources into the own resource table 11a.

The apparatus controller 10 controls the whole operations of the audiovisual processing apparatus 100. For example, the apparatus controller 10 controls receiving data captured by a camera 3 which is connected to the external input interface 80, encoding the data by the data encoder 81, and storing the encoded data into the external memory 5 via the external memory controller 50 or into the internal memory 61 via the internal memory controller 60.

The apparatus controller 10 determines whether or not external devices such as the operating device 1, the external display device 2, the camera 3, and the external memory 5 are connected to the operating unit 20, the external output interface 70, the external input interface 80, and the external memory controller 50. When the own resource manager 10a determines that the operating device 1 is connected to the operating unit 20, the apparatus controller 10 can determine that the audiovisual processing apparatus 100 is the commanding apparatus. Furthermore, the apparatus controller 10 includes a commanding unit 10b. The commanding unit 10b commands audiovisual processing apparatuses connected to a network 4 via their network interfaces 95, which are connected to their network controllers 90, to execute processing such as reproducing, transferring, recording and the like on audiovisual data in response to an instruction given from the operating unit 20 or the operating device 1. The network 4 including the external switch 200 shown in FIG. 1 and a public network 400 provides connection between audiovisual processing apparatuses.

Audio visual data captured by the camera 3 or received via the network interface 95 is stored in the internal memory 61 or the external memory 5. The operating unit 20 is used for giving an instruction to process the audiovisual data stored in the internal memory 61 or the external memory 5. For example, the operating unit 20 instructs to reproduce or stop reproducing the audiovisual data and instructs to output the audiovisual data to the external output interface 70. The operating unit 20 may be connected to the operating device 1 and give instructions under the control of the operating device 1.

The display controller 30 and the data reproducer 40 operate under the control of the apparatus controller 10. The data reproducer 40 controls reproducing the audiovisual data stored in the external memory 5 or the internal memory 61 in response to an instruction provided from the operating unit 20. The display controller 30 is connected with the display device 31 and outputs the reproduced data to the display device 31. The display device 31 may include a liquid crystal display or any other display device. The apparatus controller 10 may output the reproduced data to the external display device 2 connected to the external output interface 70. In addition, the apparatus controller 10 controls sending and receiving the audiovisual data via the network interface 95 to and from the network 4, such as the external switch 200 or the public network 400, which is connected to the network controller 90.

The network controller 90 is provided to make a connection with the network 4 such as the external switch 200 or the public network 400 via the network interface 95 for sending and receiving audiovisual data. The network controller 90 includes an external resource manager 91, a communication resource manager 92, an external resource table 93, and a grouping unit 94.

The grouping unit 94 determines whether another audiovisual processing apparatus whose identification information is stored in the external resource table 93 is connected to the network 4 and is available or not, and then, the grouping unit 94 groups the available apparatus together into the audiovisual processing system.

The communication resource manager 92 sends test data to the network 4 and obtains information on communication resources (e.g., communication band) to communicate with the network 4. The obtained information on the communication resources is stored in the own resource table 11a.

The external resource manager 91 requires the apparatuses grouped by the grouping unit 94 to send information on communication resources and device resources of the apparatuses and receives the information. The received information on the resources of the grouped apparatuses is stored in the external resource table 93.

Thus, when the audiovisual processing apparatus 100 which includes the network controller 90 is connected to the network 4, the audiovisual apparatus 100 can constitute a part of the audiovisual processing system in which the same audiovisual processing apparatuses cooperate.

When sending and receiving audiovisual data or a control signal to and from another apparatus, the network interface 95 modifies the data or signal. When sending the audiovisual data or control signal to another apparatus, the network interface 95 attaches control information to the audiovisual data or control signal residing in its own audiovisual processing apparatus 100. The control information to be attached may include a system 10, an IP address or other identification information stored in the external resource table 93 of the destination apparatus in association with the audiovisual data or the control signal. The audiovisual data or control signal to which the control information is attached can pass through a communication channel such as the external switch 200 or the network 4. When receiving external data from another audiovisual processing apparatus, the network interface 95 separates control information such as a system ID or an IP address from the external data and imports audiovisual data or a control signal inside.

As above, the format of audiovisual data to be transferred between the audiovisual processing apparatuses 100 is not converted into a standard transferring format. However, the data to be transferred is modified in such a manner that the control information is attached to the data. When an audiovisual processing apparatus 100 receives the data having the control information, the network interface 95 of the apparatus 100 separates the control information from the data. Thus, the apparatus 100 can process the received data as well as the data residing therein. Therefore, the commanding apparatus can control other apparatuses as though the apparatuses are internal memory such as the external memory 61. In addition, a control signal to control another apparatus is also modified in such a manner that the control information is attached to the control signal. Thus, the commanding apparatus can control another apparatus as well as the internal units of the commanding apparatus. Therefore, process cooperation in the audiovisual processing system can be further strengthened.

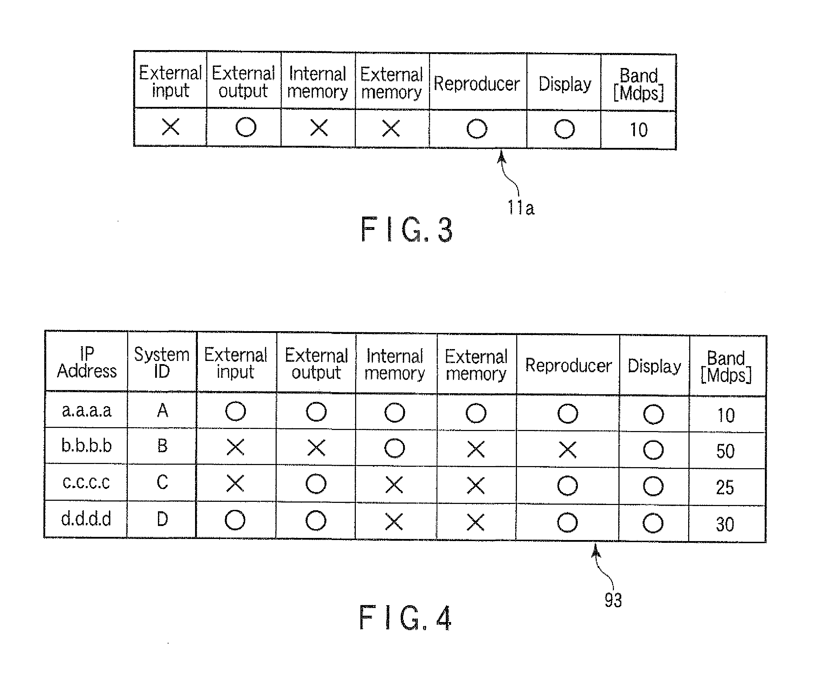

FIG. 3 shows an example of the own resource table 11a provided in the register 11 of the audiovisual processing apparatus 100. The apparatus controller 10 stores items of information on statuses of the device resources and the communication resources of the audiovisual processing apparatus 100 into the own resource table 11a. The device resources include an external input (connected via the external input interface 80), an external output (connected via the external output interface 70), the internal memory 61, the external memory 5, the data reproducer 40 and the display device 31. The devices such as the external input, external output, internal memory, external memory, data reproducer and display device provided in the audiovisual processing apparatus 100 are refereed to as own devices. The communication resources include a communication band of the audiovisual processing apparatus 100. In FIG. 3, "○" in the items of the external output, reproducer and display device represents that the corresponding devices are available. In addition, "×" in the items of external input, internal memory, external memory represents that the corresponding devices are not available. The communication band is "10 Mbps" in FIG. 3. The contents of the own resource table 11a are updated when the statuses of the resources are changed.

FIG. 4 shows an example of the external resource table 93 provided in the network controller 90 of the audiovisual processing apparatus 100. In the external resource table 93, identification information such as IP addresses and system IDs to identify other apparatuses, which are to be connected to the audiovisual processing apparatus 100 via the network 4 and to constitute a part of the audiovisual processing system, are preliminarily stored. The external resource manager 91 stores information items on statuses of the device resources and the communication resources of the other apparatuses into the external resource table 93. The device resources include an external input, an external output, an internal memory, an external memory, a data reproducer, a display device of an apparatus which is determined to be communicable with the audiovisual processing apparatus 100 and grouped together with the audiovisual processing apparatus 100 by the grouping unit 94. The devices such as the external input, external output, internal memory, external memory, data reproducer and display device provided with the other external apparatus are refereed to as external devices. In addition, the communication resources include a communication band of the apparatus.

Regarding an audiovisual processing apparatus having an IP address of "a. a. a. a", "○" in the items of external input, external output, internal memory, external memory, data reproducer, and display device represent that those devices are available. Moreover, the communication band of this apparatus is "10 Mbps".

An internal memory and a display device of an audiovisual processing apparatus having an IP address of "b. b. b. b" are available since "○" is stored in association with these devices. In addition, an external input, an external output, an external memory and a data reproducer of the apparatus having the IP address of "b. b. b. b" are not available since "×" is stored in association with these devices. The communication band of this apparatus is "50 Mbps".

In the case where all the items for the apparatuses of which IP addresses are stored in the external resource table 93 are filled with "○", "×", and values indicating the communication bands, the audiovisual processing apparatus 100 having this external resource table 93 can be communicable with these apparatuses. The audiovisual processing apparatus 100 which operates as the commanding apparatus obtains the statuses of the external resources and updates the external resource table 93 when the audiovisual processing system is constructed and the apparatuses are grouped together. Moreover, the external resource table 93 can be updated before the commanding apparatus gives a command to the dependent apparatuses.

For example, following processes are executed in the audiovisual processing system shown in FIG. 1. That is, audiovisual data captured by the camera 3b which is connected to the audiovisual processing apparatus 102 is stored into the external memory 5 which is connected to the audiovisual processing apparatus 103 via the external switch 200. The audiovisual processing apparatus 105 receives audiovisual data captured by the camera 3a via the external switch 200. The audiovisual data is stored into the internal memory of the audiovisual processing apparatus 105. The audiovisual data stored in the internal memory of the audiovisual processing apparatus 105 is transferred to the internal memory of the audiovisual processing apparatus 106. The audio visual data stored in the external memory of the audiovisual processing apparatus 103 is transferred to the audiovisual processing apparatus 106. The audiovisual processing apparatus 106 sends the audiovisual data stored therein via the network interface to the outside of the audiovisual processing system.

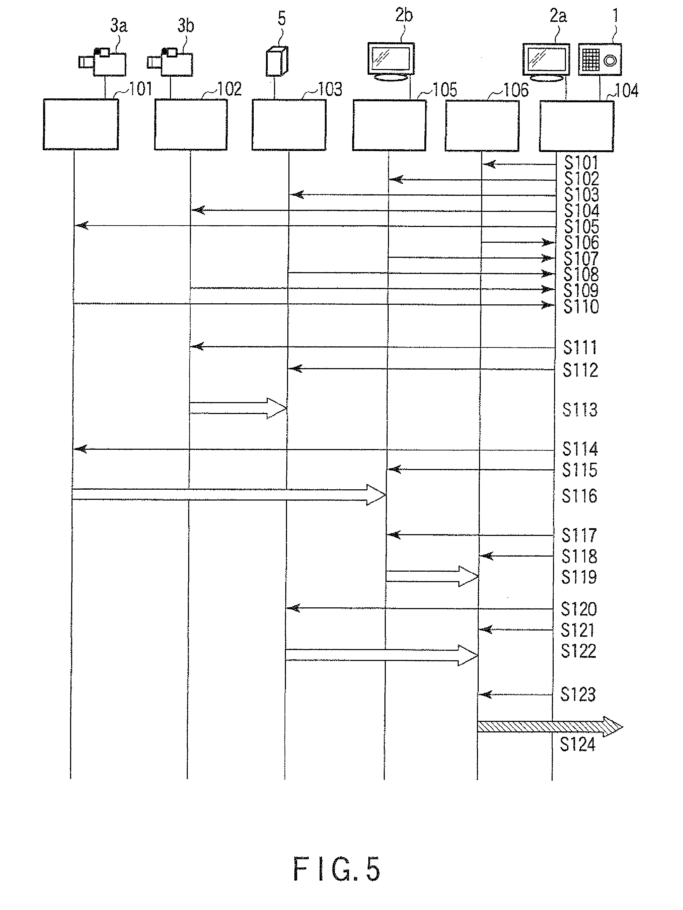

FIG. 5 shows an entire processing flow in the audiovisual processing system.

The audiovisual processing apparatus 104 is preliminarily decided to be the commanding apparatus. Thus, the audiovisual processing apparatus 104 operates as the commanding apparatus, and the other audiovisual processing apparatuses operate as the dependent apparatuses. The audiovisual processing apparatus 104 sends grouping data to the audiovisual processing apparatuses 101, 102, 103, 105 and 106 to group the apparatuses together (S101, S102, S103, S104 and S105). The information such as IP addresses or system IDs of the audiovisual processing apparatuses 101, 102, 103, 105 and 106 to be grouped is preliminarily stored in the external resource table 93 of the audiovisual processing apparatus 104. The destinations of the grouping data can be set using multicasting or an address list which can send data to the audiovisual processing apparatuses 101, 102, 103, 105 and 106. The audiovisual processing apparatuses 101, 102, 103, 105 and 106 send response data to the audiovisual processing apparatus 104 and the audiovisual processing apparatus 104 obtains information on resources of the audiovisual processing apparatuses 101, 102, 103, 105 and 106 (S106, S107, S108, S109 and S110). The audiovisual processing apparatus 104 stores the obtained resource information into the external resource table 93 which is shown, for example, in FIG. 4. The audiovisual processing apparatus 104 (commanding apparatus) may obtain the resource information of the external dependent apparatuses before the commanding apparatus gives a command to the dependent apparatuses. The audiovisual apparatus 104 obtains the resource information thereof and stores the resource information in the own resource table 11a which is shown, for example, in FIG. 3.

The audiovisual processing apparatus 104 commands the audiovisual processing apparatuses 102 and 103 to capture audiovisual data by the camera 3b connected to the audiovisual processing apparatus 102 and to store the audiovisual data into the external memory 5 connected to the audiovisual processing apparatus 103 (S111 and S112). Thus, the audiovisual data captured by the camera 3b is stored into the external memory 5 (S113).

The audiovisual processing apparatus 104 commands the audiovisual processing apparatuses 101 and 105 to capture audiovisual data by the camera 3a connected to the audiovisual processing apparatus 101 and to store the audiovisual data into the internal memory of the audiovisual processing apparatus 105 (S114 and S115). Thus, the audiovisual data captured by the camera 3a is stored into the internal memory of the audiovisual processing apparatus 105 (S116).

The audiovisual processing apparatus 104 commands the audiovisual processing apparatuses 105 and 106 to transfer the audiovisual data stored in the internal memory of the audiovisual processing apparatus 105 to the internal memory of the audiovisual processing apparatus 106 (S117 and S118). Thus, the audiovisual data is transferred from the audiovisual processing apparatus 105 to the audiovisual processing apparatus 106 (S119).

The audiovisual processing apparatus 104 commands the audiovisual processing apparatuses 103 and 106 to transfer the audiovisual data stored in the external memory 5 which is connected to the audiovisual processing apparatus 103 to the internal memory of the audiovisual processing apparatus 106 (S120 and S121). Thus, the audiovisual data is transferred from the audiovisual processing apparatus 103 to the audiovisual processing apparatus 106 (S122).

Then, the audiovisual processing apparatus 104 commands the audiovisual processing apparatus 106 to send the audiovisual data stored in the internal memory to outside of the audiovisual processing system (S123). Thus, the audiovisual data stored in the internal memory of the audiovisual processing apparatus 106 is output (S124).

As described above, since the audiovisual processing apparatuses 100 include the same network controllers 90 and the same network interfaces 95, the audiovisual processing system can be constructed without preparing an interface unit to convert a format of audiovisual data into the standard format. The audiovisual processing system can be constructed only by connecting the audiovisual processing apparatuses 100 to the network such as the external switch or the public network.

In addition, since at least one of the audiovisual processing apparatuses in the audiovisual processing system operates as the commanding apparatus, the audiovisual processing system can be controlled without preparing an additional control device such as an asset manager.

In the first embodiment, described is an example in which audiovisual data captured by a camera is stored into an internal memory of an audiovisual processing apparatus and the audiovisual data is output to the outside of the audiovisual processing system. Hereinafter, another application example of the audiovisual processing system will be described.

### Second Embodiment

According to the second embodiment, in the case where audiovisual data captured by a camera is stored into an internal or external memory of an audiovisual processing apparatus, when the capacity of the internal or external memory is short, an internal or external memory of another audiovisual processing apparatus is chosen to store the audiovisual data. With such audiovisual processing system, memory devices can be utilized more flexibly. Failure in storing audiovisual data because of shortage of storage capacity can be prevented.

The audiovisual processing apparatuses have the same configurations as the audiovisual processing apparatus 100 of the first embodiment. The same portions as those of the first embodiment will be indicated in the same reference numerals and their detailed description will be omitted.

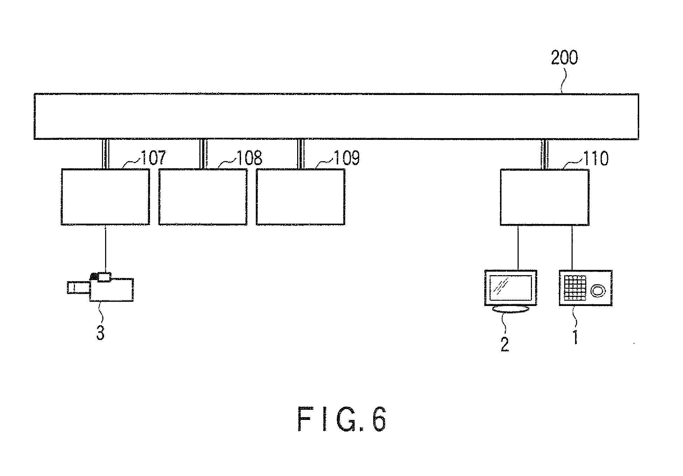

FIG. 6 shows an example of the audiovisual processing system according to the present embodiment.

The audiovisual processing system includes audiovisual processing apparatuses 107, 108, 109 and 110 (having the same configuration as the audiovisual processing apparatus 100 in FIG. 2) and the external switch 200. Each of the audiovisual processing apparatuses 107 to 110 include the network controller 90 and the network interface 95 and is connected to the external switch 200 using the network controller 90 and the network interface 95. The audiovisual processing apparatuses 107 to 110 are connected to each other via the external switch 200. The audiovisual processing apparatus 107 is connected to a camera 3 and the audiovisual processing apparatus 110 is connected to an external display device 2 and an operating device 1. In the second embodiment, the audiovisual processing apparatus 110 to which the operating device 1 is connected operates as the commanding apparatus and the audiovisual processing apparatuses 107, 108 and 109 operate as the dependent apparatuses.

For example, following processes are executed in the audiovisual processing system shown in FIG. 6. That is, audiovisual data is captured by the camera 3 and stored into an internal memory of the audiovisual processing apparatus 107. When the storage capacity of the internal memory of the audiovisual processing apparatus 107 is short, another memory of the audiovisual processing apparatuses in the audiovisual processing system is chosen to store the audiovisual data.

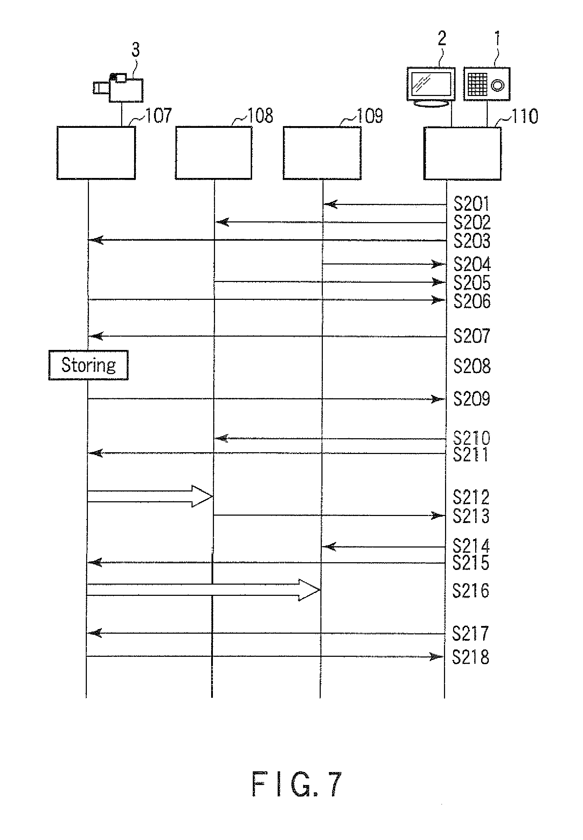

FIG. 7 shows an entire processing flow in the audiovisual processing system shown in FIG. 6.

The audiovisual processing apparatus 110 is preliminarily decided to be the commanding apparatus. Thus, the audiovisual processing apparatus 110 operates as the commanding apparatus, and the other audiovisual processing apparatuses operate as the dependent apparatuses. The audiovisual processing apparatus 110 sends grouping data to the audiovisual processing apparatuses 107, 108 and 109 to group the apparatuses together (S201, S202 and S203). The information of the audiovisual processing apparatuses 107, 108 and 109 to be grouped is preliminarily stored in the external resource table 93 of the audiovisual processing apparatus 110. The destinations of the grouping data can be set using multicasting or an address list which can send data to the audiovisual processing apparatuses 107, 108 and 109. The audiovisual processing apparatuses 107, 108 and 109 send response data to the audiovisual processing apparatus 110 and the audiovisual processing apparatus 110 obtains information on resources of the audiovisual processing apparatuses 107, 108 and 109 (S204, S205 and S206). The audiovisual processing apparatus 110 stores the obtained resource information into the external resource table 93 similarly to the first embodiment. The audiovisual processing apparatus 110 (commanding apparatus) may obtain the resource information of the external dependent apparatuses before the commanding apparatus gives a command to the dependent apparatuses. The audiovisual apparatus 110 obtains the resource information thereof and stores the resource information in the own resource table 11a which is shown, for example, in FIG. 3.

The audiovisual processing apparatus 110 commands the audiovisual processing apparatus 107 to capture audiovisual data by the camera 3 and to store the captured audiovisual data into the internal memory of the audiovisual processing apparatus 107 (S207). Thus, the audiovisual data captured by the camera 3 is stored into the internal memory of the audiovisual processing apparatus 107 (S208).

When the apparatus controller 10 in the audiovisual processing apparatus 107 determines that the remaining storage capacity of the internal memory becomes a predetermined level that is corresponding to only T1 seconds, the apparatus controller 10 or the commanding unit 10b of the audiovisual processing apparatus 107 notifies the audiovisual processing apparatus 110 of the shortage of the storage capacity (S209). The audiovisual processing apparatus 110 receives the notification and commands the audiovisual processing apparatuses 108 and 107 to change the memory for storing the audiovisual data after T1 seconds to the internal memory of the audiovisual processing apparatus 108 which has enough capacity (S210 and S211). After T1 seconds, the audiovisual data captured by the camera 3 is transferred from the audiovisual processing apparatus 107 to the internal memory of the audiovisual processing apparatus 108 (S212).

When the apparatus controller 10 in the audiovisual processing apparatus 108 determines that the remaining storage capacity of the internal memory becomes a predetermined level that is corresponding to T2 seconds, the audiovisual processing apparatus 108 notifies the audiovisual processing apparatus 110 of the shortage of the storage capacity (S213). The audiovisual processing apparatus 110 receives the notification and commands the audiovisual processing apparatuses 109 and 107 to change the memory for storing the audiovisual data after T2 seconds to the internal memory of the audiovisual processing apparatus 109 which has enough capacity (S214 and S215). After T2 seconds, the audiovisual data captured by the camera 3 is transferred from the audiovisual processing apparatus 107 to the internal memory of the audiovisual processing apparatus 109 (S216).

To terminate data capturing, the audiovisual processing apparatus 110 commands the audiovisual processing apparatus 107 to terminate the data capturing (S217), and the audiovisual processing apparatus 107 notifies the audiovisual processing apparatus 110 of termination of the data capture (S218).

Thus, memory devices can be utilized more flexibly. In addition, failure in storing audiovisual data because of shortage of the memory capacities can be prevented.

### Third Embodiment

In the third embodiment, the commanding apparatus transfers the same audiovisual data to the dependent apparatuses.

The audiovisual processing apparatuses have the same configurations as the audiovisual processing apparatus 100 of the first embodiment. The same portions as those of the first embodiment will be indicated in the same reference numerals and their detailed description will be omitted.

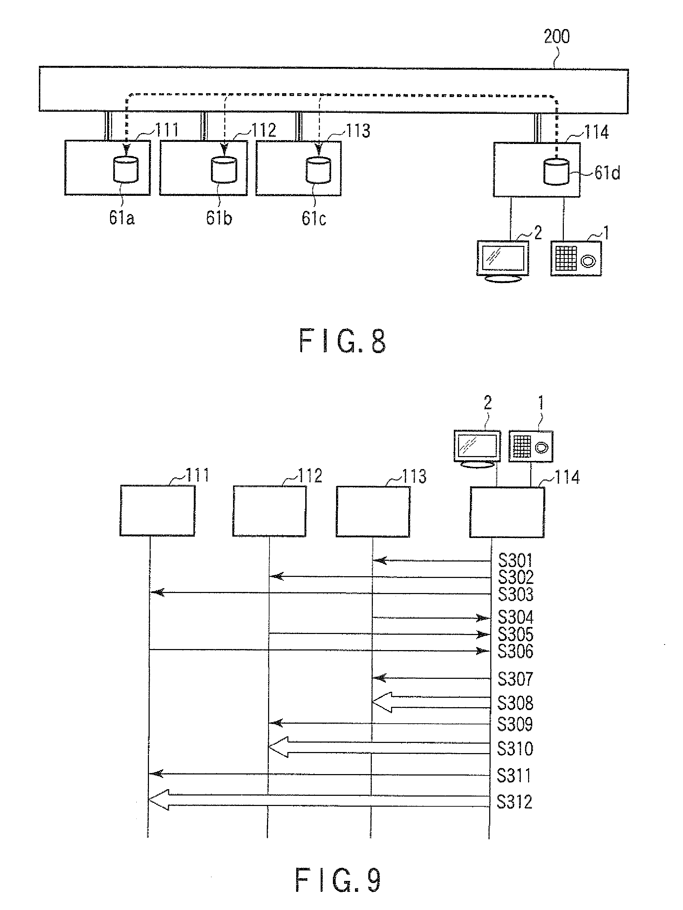

FIG. 8 shows an example of the audiovisual processing system according to the present embodiment.

The audiovisual processing system includes audiovisual processing apparatuses 111, 112, 113 and 114 (having the same configuration as the audiovisual processing apparatus 100 in FIG. 2) and the external switch 200. Each of the audiovisual processing apparatuses 111 to 114 includes the network controller 90 and the network interface 95 and is connected to the external switch 200 using the network controller 90 and the network interface 95. The audiovisual processing apparatuses 111 to 114 are connected to each other via the external switch 200. The audiovisual processing apparatuses 111 to 114 respectively include internal memories 61a, 61b, 61c and 61d (represented by the internal memory 60 in FIG. 2). The audiovisual processing apparatus 114 is connected to an external display device 2 and an operating device 1. In the third embodiment, the audiovisual processing apparatus 114 to which the operating device 1 is connected operates as the commanding apparatus and the audiovisual processing apparatuses 111, 112 and 113 operate as the dependent apparatuses.

For example, following processes are executed in the audiovisual processing system shown in FIG. 8. That is, the audiovisual processing apparatus 114 which is the commanding apparatus transfers the same audiovisual data to the other audiovisual processing apparatuses.

FIG. 9 shows an entire processing flow in the audiovisual processing system shown in FIG. 8.

The audiovisual processing apparatus 114 determines that the operating device 1 is connected to the audiovisual processing apparatus 114 and operates as the commanding apparatus. The other audiovisual processing apparatuses operate as the dependent apparatuses. The audiovisual processing apparatus 114 sends grouping data to the audiovisual processing apparatuses 111, 112 and 113 to group the apparatuses together (S301, S302 and S303). The information on the audiovisual processing apparatuses 111, 112 and 113 to be grouped is preliminarily stored in the external resource table 93 of the audiovisual processing apparatus 114. The destinations of the grouping data can be set using multicasting or an address list which can send data to the audiovisual processing apparatuses 111, 112 and 113. The audiovisual processing apparatuses 111, 112 and 113 send response data to the audiovisual processing apparatus 114 and the audiovisual processing apparatus 114 obtains information on resources of the audiovisual processing apparatuses 111, 112 and 113 (S304, S305 and S306). The audiovisual processing apparatus 114 stores the obtained resource information into the external resource table 93.

The audiovisual processing apparatus 114 notifies the audiovisual processing apparatus 113 that the audiovisual processing apparatus 114 will send audiovisual data stored in the internal memory 61d to the internal memory 61c (S307). Then, the audiovisual data stored in the internal memory 61d of the audiovisual processing apparatus 114 is transferred to the internal memory 61c of the audiovisual processing apparatus 113 (S308).

The audiovisual processing apparatus 114 notifies the audiovisual processing apparatus 112 that the audiovisual processing apparatus 114 will send the audiovisual data stored in the internal memory 61d to the internal memory 61b (S309). Then, the audiovisual data stored in the internal memory 61d of the audiovisual processing apparatus 114 is transferred to the internal memory 61b of the audiovisual processing apparatus 112 (S310).

The audiovisual processing apparatus 114 notifies the audiovisual processing apparatus 111 that the audiovisual processing apparatus 114 will send the audiovisual data stored in the internal memory 61d to the internal memory 61a (S311). Then, the audiovisual data stored in the internal memory 61d of the audiovisual processing apparatus 114 is transferred to the internal memory 61a of the audiovisual processing apparatus 111 (S312).

As described above, since the audiovisual processing apparatuses 111, 112, 113 and 114 include the same network controllers 90, the audiovisual data stored in a memory of one of the audiovisual processing apparatuses can be transferred as it is via the network. In addition, an interface unit to convert the format of the audiovisual data into the standard format is not required.

### Fourth Embodiment

In the fourth embodiment, the audiovisual processing system in which two audiovisual processing apparatuses are connected via the public network 400 will be described. The public network 400 may include the internet, LAN, WAN and another wired or wireless network. Since the audiovisual processing apparatuses are connected via the public network 400, even though the apparatuses are provided remotely, the apparatuses can constitute a part of the audiovisual processing system. By way of example, a case in which audiovisual data captured by the camera 3 is stored into an internal memory of an audiovisual processing apparatus will be described.

The audiovisual processing apparatuses have the same configurations as the audiovisual processing apparatus 100 of the first embodiment. The same portions as those of the first embodiment will be indicated in the same reference numerals and their detailed description will be omitted.

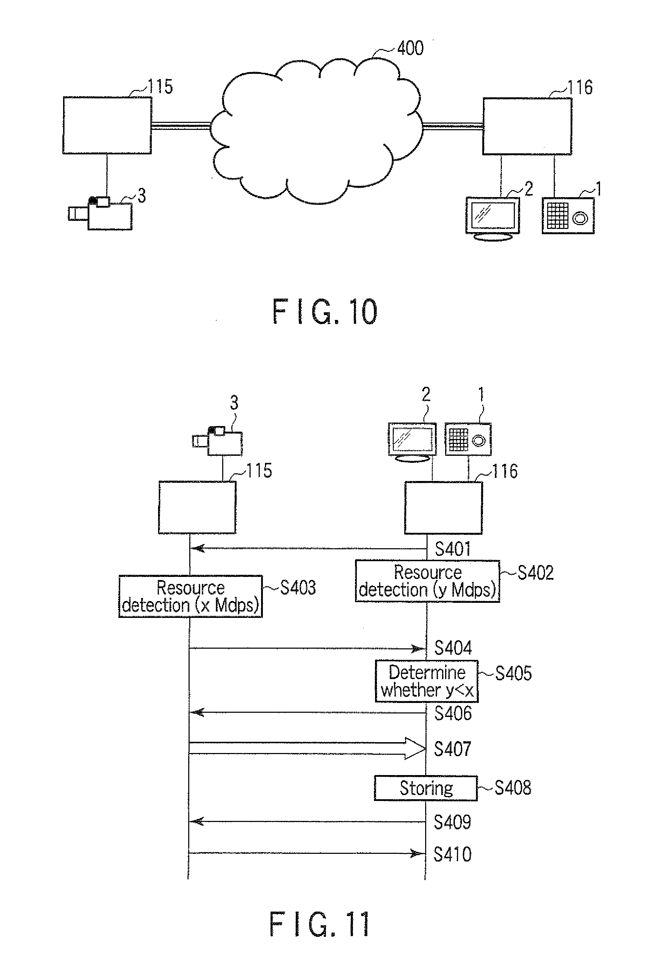

FIG. 10 shows an example of the audiovisual processing system according to the present embodiment.

The audiovisual processing system includes audiovisual processing apparatuses 115 and 116 (having the same configuration as the audiovisual processing apparatus 100 in FIG. 2) and the public network 400. Each of the audiovisual processing apparatuses 115 and 116 includes the network controller 90 and the network interface 95 and is connected to the public network 400 using the network controller 90 and the network interface 95. The audiovisual processing apparatuses 115 and 116 are connected to each other via the public network 400. The audiovisual processing apparatus 115 is connected to a camera 3 and the audiovisual processing apparatus 116 is connected to an external display device 2 and an operating device 1. In the fourth embodiment, the audiovisual processing apparatus 116 to which the operating device 1 is connected operates as the commanding apparatus and the audiovisual processing apparatus 115 operates as the dependent apparatus.

For example, following processes are executed in the audiovisual processing system shown in FIG. 10. That is, the camera 3 connected to the audiovisual processing apparatus 115 captures audiovisual data. The audiovisual data is transferred via the public network 400 to an internal memory of the audiovisual processing apparatus 116 and stored therein.

FIG. 11 shows an entire processing flow in the audiovisual processing system shown in FIG. 10.

The audiovisual processing apparatus 116 requires the audiovisual processing apparatus 115 to send information on the communication resource (S401). The audiovisual processing apparatus 116 also detects a value "y" of a communication band of the audiovisual processing apparatus 116 (S402). The audiovisual processing apparatus 115 detects a value "x" of a communication band of the audiovisual processing apparatus 115 (S403). The audiovisual processing apparatus 115 notifies the audiovisual processing apparatus 116 about the value of "x" (S404). The audiovisual processing apparatus 116 compares the values of "x" and "y" to determine whether y < x or not (S405). When y ≥ x, storing the audiovisual data into the internal memory in the audiovisual processing apparatus 116 is cancelled for lack of the communication resources. When y < x, the audiovisual processing apparatus 116 commands the audiovisual processing apparatus 115 to store audiovisual data captured by the camera 3 which is connected to the audiovisual processing apparatus 115 into the internal memory of the audiovisual processing apparatus 116 (S406). The audiovisual processing apparatus 115 transmits the audiovisual data captured by the camera 3 to the internal memory of the audiovisual processing apparatus 116 (S407). The audiovisual processing apparatus 116 stores the transmitted data into the internal memory thereof (S408).

To terminate storing the data, the audiovisual processing apparatus 116 commands the audiovisual processing apparatus 115 to stop data capturing (S409). The audiovisual processing 115 responds the termination command and the process is terminated (S410).

As above, the audiovisual processing apparatuses 115 and 116 include the same network controllers 90 and the same network interfaces 95 so that the audiovisual processing apparatuses 115 and 116 can be connected to each other via the public network 400. Therefore, even though the apparatuses are provided remotely, the audiovisual processing system can be constructed and audiovisual processes can be executed.

In addition, an additional line dedicated to connect the apparatuses is not required to transfer audiovisual data between the apparatuses. The apparatuses are only required to be connected with the public network 400 which is already laid.

### Fifth Embodiment

In the fifth embodiment, an audiovisual processing system in which four audiovisual processing apparatuses are connected via the public network 400 will be described. With such configuration, an audiovisual processing system can be constructed between a central broadcasting station and local broadcasting studios even though the local studios are remote from the central station which controls the local studios. In the audiovisual processing system, an audiovisual processing apparatus provided in the central station operates as the commanding apparatus and commands the local studios to start or stop recording a program.

In the following system, three audiovisual processing apparatus to which cameras are respectively connected are controlled from a commanding audiovisual processing apparatus to start or stop recording audiovisual data. The commanding apparatus is connected to the three dependent apparatuses via the public network 400. The recorded audiovisual data is monitored by the commanding apparatus.

The audiovisual processing apparatuses have the same configurations as the audiovisual processing apparatus 100 of the first embodiment. The same portions as those of the first embodiment will be indicated in the same reference numerals and their detailed description will be omitted.

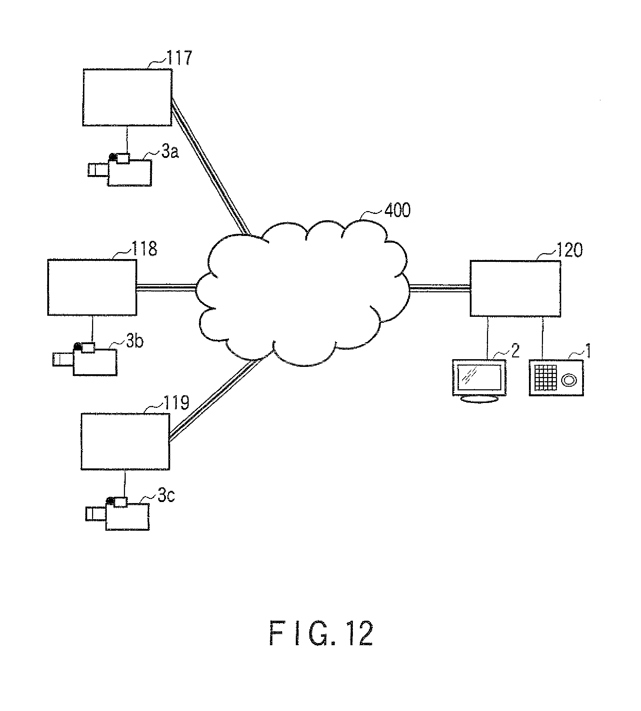

FIG. 12 shows an example of the audiovisual processing system according to the present embodiment.

The audiovisual processing system includes audiovisual processing apparatuses 117, 118, 119 and 120 (having the same configuration as the audiovisual processing apparatus 100 in FIG. 2). Each of the audiovisual processing apparatuses 117 to 120 is connected to the public network 400 using the network interface 95. The audiovisual processing apparatuses 117 to 120 are connected to each other via the public network 400. The audiovisual processing apparatuses 117, 118 and 119 are respectively connected to cameras 3a, 3b and 3c (represented by the camera 3 in FIG. 2) and the audiovisual processing apparatus 120 is connected to an external display device 2 and an operating device 1. In the fifth embodiment, the audiovisual processing apparatus 120 to which the operating device 1 is connected operates as the commanding apparatus and the audiovisual processing apparatuses 117, 118 and 119 operate as the dependent apparatuses.

For example, following processes are executed in the audiovisual processing system shown in FIG. 12. That is, audiovisual data being captured by the camera 3a, 3b or 3c is displayed on the external display device 2 of the audiovisual processing apparatus 120 and monitored. The audiovisual processing apparatus 120 instructs to start or stop recording the audiovisual data captured by the camera 3a, 3b or 3c.

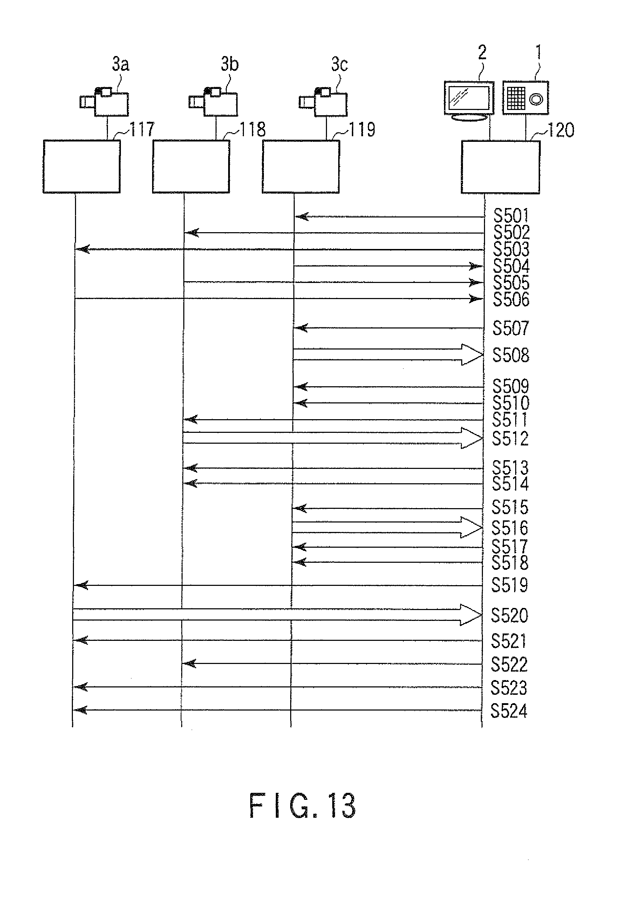

FIG. 13 shows an entire processing flow in the audiovisual processing system shown in FIG. 12.

The audiovisual processing apparatus 120 to which the operating device 1 is connected operates as the commanding apparatus, and the other audiovisual processing apparatuses operate as the dependent apparatuses. The audiovisual processing apparatus 120 sends grouping data to the audiovisual processing apparatuses 117, 118 and 119 to group the apparatuses together (S501, S502 and S503). The information of the audiovisual processing apparatuses 117, 118 and 119 to be grouped is preliminarily stored in the external resource table 93 of the audiovisual processing apparatus 120. The destinations of the grouping data can be set using multicasting or an address list which can send data to the audiovisual processing apparatuses 117, 118 and 119. The audiovisual processing apparatuses 117, 118 and 119 send response data to the audiovisual processing apparatus 120 and the audiovisual processing apparatus 120 obtains information on resources of the audiovisual processing apparatuses 117, 118 and 119 (S504, S505 and S506). The audiovisual processing apparatus 120 stores the obtained resource information into the external resource table 93. The audiovisual processing apparatus 120 obtains the resource information thereof and stores the resource information in the own resource table 11a.

The audiovisual processing apparatus 120 commands the audiovisual processing apparatus 119 to send audiovisual data captured by the camera 3c (S507). The audiovisual processing apparatus 119 sends the audiovisual data captured by the camera 3c to the audiovisual processing apparatus 120 (S508). The data is displayed on the external display device 2 connected to the audiovisual processing apparatus 120.

When the external display device 2 displays the audiovisual data from the camera 3c, the user can view the displayed data. In the case where the user operates the operation device 1 to start storing the captured audiovisual data into the internal memory of the audiovisual processing apparatus 119, the audiovisual processing apparatus 120 commands the audiovisual processing apparatus 119 to store the audiovisual data captured by the camera 3c into the internal memory of the audiovisual processing apparatus 119 (S509). Furthermore, the audiovisual processing apparatus 120 commands the audiovisual processing apparatus 119 to terminate sending the audiovisual data from the camera 3c to the audiovisual processing apparatus 120 (S510).

The audiovisual processing apparatus 120 commands the audiovisual processing apparatus 118 to send audiovisual data captured by the camera 3b (S511). The audiovisual processing apparatus 118 sends the audiovisual data captured by the camera 3b to the audiovisual processing apparatus 120 (S512). The data is displayed on the external display device 2 connected to the audiovisual processing apparatus 120.

When the external display device 2 displays the audiovisual data from the camera 3b, the user can view the displayed data. In the case where the user operates the operation device 1 to start storing the captured audiovisual data into the internal memory of the audiovisual processing apparatus 118, the audiovisual processing apparatus 120 commands the audiovisual processing apparatus 118 to store the audiovisual data captured by the camera 3b into the internal memory of the audiovisual processing apparatus 118 (S513). Furthermore, the audiovisual processing apparatus 120 commands the audiovisual processing apparatus 118 to terminate sending the audiovisual data from the camera 3b to the audiovisual processing apparatus 120 (S514).

Then, the audiovisual processing apparatus 120 commands the audiovisual processing apparatus 119 to send audiovisual data captured by the camera 3c again (S515). The audiovisual processing apparatus 119 sends the audiovisual data captured by the camera 3c to the audiovisual processing apparatus 120 (S516). The data is displayed on the external display device 2 connected to the audiovisual processing apparatus 120.

When the external display device 2 displays the audiovisual data from the camera 3c, the user can view the displayed data. In the case where the user operates the operation device 1 to stop storing the captured audiovisual data into the internal memory of the audiovisual processing apparatus 119, the audiovisual processing apparatus 120 commands the audiovisual processing apparatus 119 to stop storing the audiovisual data captured by the camera 3c (S517). Furthermore, the audiovisual processing apparatus 120 commands the audiovisual processing apparatus 119 to terminate sending the audiovisual data from the camera 3c to the audiovisual processing apparatus 120 (S518).

Then, the audiovisual processing apparatus 120 commands the audiovisual processing apparatus 117 to send audiovisual data captured by the camera 3a (S519). The audiovisual processing apparatus 117 sends the audiovisual data captured by the camera 3a to the audiovisual processing apparatus 120 (S520). The data is displayed on the external display device 2 connected to the audiovisual processing apparatus 120.

When the external display device 2 displays the audiovisual data from the camera 3a, the user can view the displayed data. In the case where the user operates the operation device 1 to start storing the captured audiovisual data into the internal memory of the audiovisual processing apparatus 117, the audiovisual processing apparatus 120 commands the audiovisual processing apparatus 117 to store the audiovisual data captured by the camera 3a into the internal memory of the audiovisual processing apparatus 117 (S521).

Thereafter, the audiovisual processing apparatus 120 commands the audiovisual processing apparatus 118 to stop storing the audiovisual data captured by the camera 3b into the internal memory of the audiovisual processing apparatus 118 (S522). Moreover, the audiovisual processing apparatus 120 commands the audiovisual processing apparatus 117 to stop storing the audiovisual data captured by the camera 3a into the internal memory of the audiovisual processing apparatus 117 (S523). In addition, the audiovisual processing apparatus 120 commands the audiovisual processing apparatus 117 to terminate sending the audiovisual data from the camera 3a to the audiovisual processing apparatus 120 (S524).

As described above, the audiovisual processing apparatus 120 which operates as the commanding apparatus is connected to the public network 400, and the audiovisual processing apparatuses 117, 118 and 119 are also connected to the public network 400 to form the audiovisual processing system. Thus, the audiovisual data from a remote camera can be monitored and recorded. While recording the audiovisual data, data to be monitored can be switched to the other data which is from the other remote camera. It is also possible to instruct to store the other monitored data into a memory. According to such audiovisual processing system, the commanding apparatus provided in the broadcasting station can command an audiovisual processing apparatus provided in a remote studio to record audiovisual data.

### Sixth embodiment

In the sixth embodiment, an audiovisual processing system in which a nonlinear editing apparatus is connected with audiovisual processing apparatuses via an external switch will be described. In the first to fifth embodiments, the same audiovisual processing apparatuses are included in the audiovisual processing systems. However, in the present embodiment, any apparatus including the same network controller 90 and the network interface 95 as the audiovisual processing apparatus 100 may be contained in the audiovisual processing system to flexibly utilize the system. In the present embodiment, a nonlinear editing apparatus 300 which includes the same network controller 90 and the same network interface 95 as the audiovisual processing apparatus 100 edits audiovisual data stored in internal and external memories of the audiovisual processing apparatus 100.

The audiovisual processing apparatuses have the same configurations as the audiovisual processing apparatus 100 of the first embodiment. The same portions as those of the first embodiment will be indicated in the same reference numerals and their detailed description will be omitted.

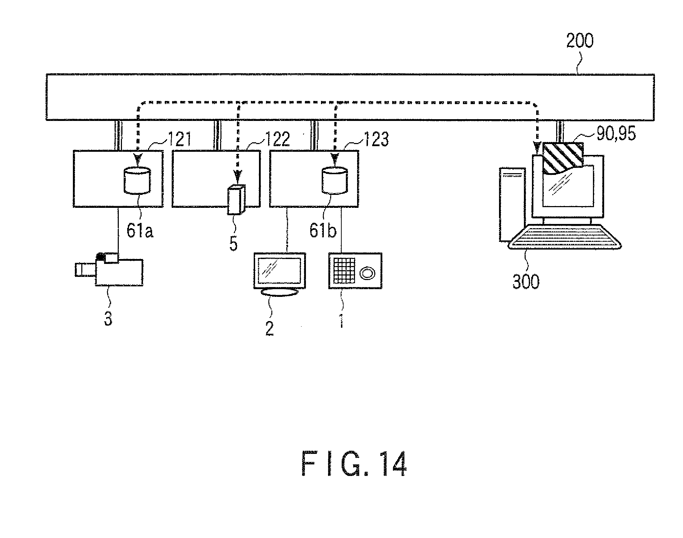

FIG. 14 shows an example of the audiovisual processing system according to the present embodiment.

The audiovisual processing system includes audiovisual processing apparatuses 121, 122 and 123, the nonlinear editing apparatus 300 and an external switch 200. Each of the audiovisual processing apparatuses 121 to 123 and the nonlinear editing apparatus 300 include a network controller 90 and a network interface 95 and is connected to the external switch 200 using the network controller 90 and the network interface 95. The audiovisual processing apparatuses 121 to 123 and the nonlinear editing apparatus 300 are connected to each other via the external switch 200. The audiovisual processing apparatuses 121 and 123 respectively include internal memories 61a and 61b. The audiovisual processing apparatus 122 is connected with an external memory 5. The audiovisual processing apparatus 123 is connected with an external display device 2 and an operating device 1. In the sixth embodiment, the audiovisual processing apparatus 123 to which the operating device 1 is connected operates as the commanding apparatus. The audiovisual processing apparatuses 121 and 122 operate as dependent apparatuses.

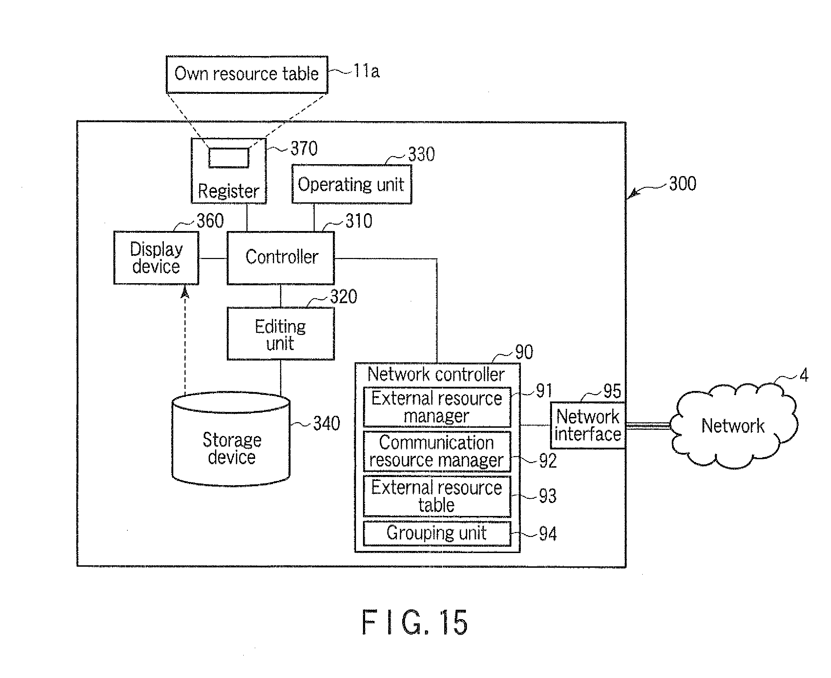

FIG. 15 is a block diagram showing a configuration of a nonlinear editing apparatus 300 in the audiovisual processing system.

The nonlinear editing apparatus 300 includes a controller 310, an editing unit 320, an operating unit 330, a storage device 340, a display device 360, a register 370, a network controller 90, and a network interface 95.

The controller 310 is connected to the editing unit 320, the operating unit 330, the display device 360, the register 370 and the network controller 90. The register 370 stores control information for the units of the nonlinear editing apparatus 300. The register 370 includes an own resource table 11a which stores information on usage statuses of the units and devices in the nonlinear editing apparatus 300 (device resources) and communication resources of the nonlinear editing apparatus 300. The controller 310 obtains information of the device resources and stores the information on the device resources into the own resource table 11a.

The controller 310 controls the whole operations of the nonlinear editing apparatus 300 in response to an operation instruction provided from the operating unit 330. For example, the controller 310 edits audiovisual data stored in the internal memories of the audiovisual processing apparatuses 121 to 123 or stored in the storage device 340, and displays the audiovisual data being edited on the display device 360.

The operating unit 330 is used to instruct to edit audiovisual data stored in the internal memories of the audiovisual processing apparatuses or stored in the storage device 340.

The display device 360 operates under the control of the controller 310. The display device 360 displays reproduced data. In addition, the controller 310 controls sending and receiving audiovisual data via the network interface 95 to and from the network 4, such as the external switch or the public network.

The network controller 90 has the same configuration as that of the audiovisual processing apparatus 100 shown in FIG. 2. Therefore, detailed description of the network controller 90 of the nonlinear editing apparatus 300 will be omitted. When the nonlinear editing apparatus 300 which includes the network controller 90 is connected to the network 4, the nonlinear editing apparatus 300 can constitute a part of the audiovisual processing system in which the audiovisual processing apparatuses cooperate. The contents of the own resource table 11a are similar to those of FIG. 3, and the contents of the external resource table 93 are similar to those of FIG. 4.

For example, following processes are executed in the audiovisual processing system shown in FIG. 14. That is, the audiovisual processing apparatus 123 which operates as the commanding apparatus groups the audiovisual processing apparatuses 121 and 122 together. The nonlinear editing apparatus 300 edits audiovisual data stored in the internal memories 61a and 61b and the external memory 5 of the grouped audiovisual processing apparatuses 121, 123 and 122.

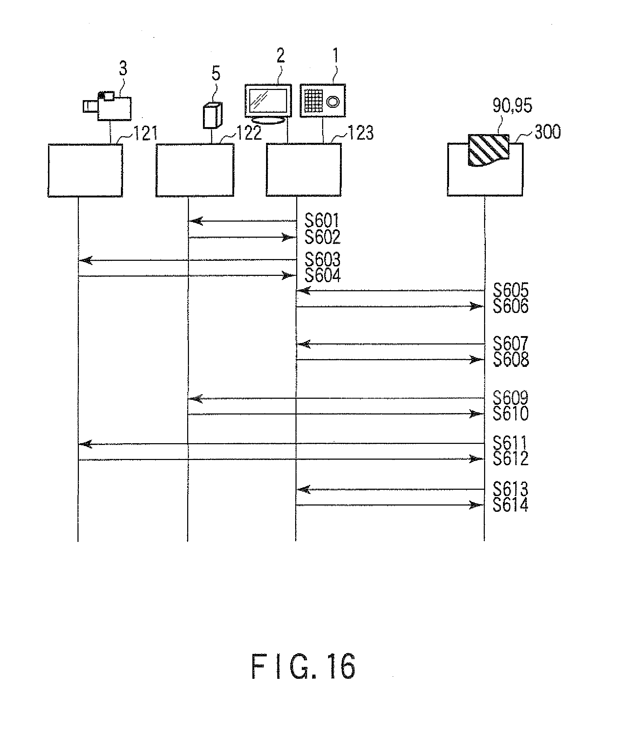

FIG. 16 shows an entire processing flow in the audiovisual processing system shown in FIG. 14.

The audiovisual processing apparatus 123 to which the operating device 1 is connected operates as the commanding apparatus, and the other audiovisual processing apparatuses operate as the dependent apparatuses. The audiovisual processing apparatus 123 sends grouping data to the audiovisual processing apparatuses 121 and 122 in order to group the audiovisual processing apparatuses 121 and 122 together (S601 and S602). The information of the audiovisual processing apparatuses 121 and 122 to be grouped is preliminarily stored in the external resource table 93 of the audiovisual processing apparatus 123. The destinations of the grouping data can be set using multicasting or an address list similarly to the first embodiment. The audiovisual processing apparatuses 121 and 122 send response data to the audiovisual processing apparatus 123 and the audiovisual processing apparatus 123 obtains information on resources of the audiovisual processing apparatuses 121 and 122 (S603 and S604). The audiovisual processing apparatus 123 stores the obtained resource information into the external resource table 93. The audiovisual apparatus 123 obtains the resource information thereof and stores the resource information in the own resource table 11a.

The nonlinear editing apparatus 300 requests the audiovisual processing apparatus 123 which operates as the commanding apparatus 123 to permit the nonlinear editing apparatus 300 to login the group (S605). To permit the nonlinear editing apparatus 300 to login the group, the audiovisual processing apparatus 123 notifies the editing apparatus 300 about access conditions to the audiovisual processing apparatuses 121, 122 and 123 corresponding to their communication resources (S606).

Hereinafter it is assumed that the access conditions allow the nonlinear editing apparatus 300 to edit audiovisual data stored in the internal memories 61a and 61b of the audiovisual processing apparatuses 121 and 123 and in the external memory 5 connected to the audiovisual processing apparatus 122.

The nonlinear editing apparatus 300 instructs the audiovisual processing apparatus 123 to read audiovisual data stored in the internal memory 61b (S607). The audiovisual processing apparatus 123 sends the data read from the internal memory 61b to the nonlinear editing apparatus 300 (S608). The nonlinear editing apparatus 300 instructs the audiovisual processing apparatus 122 to read audiovisual data stored in the external memory 5 (S609). The audiovisual processing apparatus 122 sends the data read from the external memory 5 to the nonlinear editing apparatus 300 (S610). Furthermore, the nonlinear editing apparatus 300 instructs the audiovisual processing apparatus 121 to read audiovisual data stored in the internal memory 61a (S611). The audiovisual processing apparatus 121 sends the data read from the internal memory 61a to the nonlinear editing apparatus 300 (S612). Thus, the nonlinear editing apparatus 300 can edit data items sent from the audiovisual processing apparatuses 121 to 123.

To terminate editing the audiovisual data sent from the internal memories 61a and 61b and the external memory 5, the nonlinear editing apparatus 300 request the audiovisual processing apparatus 123 which operates as the commanding apparatus to permit logging out (S613). In response, the audiovisual processing apparatus 123 permits the nonlinear editing apparatus 300 to log out from the group (S614).

As described above, all the apparatuses contained in the audiovisual processing system include the same network controllers 90 and the same network interfaces 95. Therefore, the audiovisual processing system can realize cooperation between apparatuses.

The present invention is not limited to the above described configurations and can be modified variously. For example, at the time of grouping apparatuses which are connected via the network together, authentication processing may be performed using a password or any other authentication information. Alternatively, the grouping may be performed using authentication information similar to the login information utilized to log in the grouped system.

In addition, the present invention may be realized as a computer readable recording medium in which a program for causing a computer to function as predetermined means, causing the computer to realize a predetermined function, or causing the computer to conduct predetermined means is stored.

## Claims

1. An audiovisual processing system **characterized by** comprising:
audiovisual processing apparatuses (100) configured to record and edit audiovisual data which includes at least one of audio data and image data; and
a connection network (4, 200, 400) configured to connect the audiovisual processing apparatuses,
each of the audiovisual processing apparatuses comprising
an own device (2, 5, 31, 40, 61) configured to process internal audiovisual data,
an external resource table (93) configured to store identification information of at least one external apparatus including at least one of the audiovisual processing apparatuses,
a grouping unit (94) configured to determine whether or not the external apparatus is communicable with the audiovisual processing apparatus via the connection network, and to group the external apparatus together with the audiovisual processing apparatus when it is determined that the external apparatus is communicable with the audiovisual processing apparatus,
a commanding unit (10b) configured to give a command to the external apparatus in response to an operation input made by a user,
an external resource manager (91) configured to obtain information on at least one external device and store the obtained information in the external resource table, the external device processing audiovisual data and being controlled by the external apparatus
a data transfer controller (90) configured to control sending and receiving data to and from the external device in response to the command from the commanding unit,
a data modifier (95) configured to attach control information for controlling the external device to the internal audiovisual data when the data transfer controller sends the internal audiovisual data to the external device, and configured to separate control information from external audiovisual data sent from the external device when the data transfer controller receives the external audiovisual data from the external device, and
an device controller (10) configured to provide the external audiovisual data for the own device.

2. The audiovisual processing system according to claim 1, the audiovisual processing apparatus **characterized by** further comprising:
a capacity detector (10) configured to detect remaining storage capacity of the own device; and
an output controller (10) configured to control the internal or external audiovisual data to be output to an external device when the capacity detector detects that the remaining storage capacity of the own device becomes a predetermined level.

3. The audiovisual processing system according to claim 1, the audiovisual processing apparatus **characterized by** further comprising:
a own resource manger (10a) configured to determine whether or not an operating device (1) is connected to the audiovisual processing apparatus,
wherein the own resource manager (10a) determines that the audiovisual processing apparatus operates as a commanding apparatus which gives a command to the external apparatus when it is determined that the operating device is connected to the audiovisual processing apparatus.

4. The audiovisual processing system according to claim 1, **characterized in that** the audiovisual processing apparatuses (100) include a nonlinear editing apparatus (300).

5. An audiovisual processing apparatus for use in an audiovisual processing system including audiovisual processing apparatuses (100) configured to record and edit audiovisual data which includes at least one of audio data and image data and a connection network (4, 200, 400) configured to connect the audiovisual processing apparatuses, the audiovisual processing apparatus **characterized by** comprising:
an own device (2, 5, 31, 40, 61) configured to process internal audiovisual data;
an external resource table (93) configured to store identification information of at least one external apparatus including at least one of the audiovisual processing apparatuses;
a grouping unit (94) configured to determine whether or not the external apparatus is communicable with the audiovisual processing apparatus via the connection network, and to group the external apparatus together with the audiovisual processing apparatus when it is determined that the external apparatus is communicable with the audiovisual processing apparatus;
a commanding unit (10b) configured to give a command to the external apparatus in response to an operation input made by a user;
an external resource manager (91) configured to obtain information on at least one external device and store the obtained information in the external resource table, the external device processing audiovisual data and being controlled by the external apparatus;
a data transfer controller (90) configured to control sending and receiving data to and from the external device in response to the command from the commanding unit;
a data modifier (95) configured to attach control information for controlling the external device to the internal audiovisual data when the data transfer controller sends the internal audiovisual data to the external device, and configured to separate control information from external audiovisual data sent from the external device when the data transfer controller receives the external audiovisual data from the external device; and
an device controller (10) configured to provide the external audiovisual data for the own device.

6. The audiovisual processing apparatus according to claim 5, **characterized by** further comprising:
a capacity detector (10) configured to detect remaining storage capacity of the own device, and
an output controller (10) configured to control the internal or external data to be output to an external device when the capacity detector detects that the remaining storage capacity of the own device becomes a predetermined level.

7. The audiovisual processing apparatus according to claim 5, **characterized by** further comprising:
a own resource manger (10a) configured to determine whether or not an operating device (1) is connected to the audiovisual processing apparatus,
wherein the own resource manager (10a) determines that the audiovisual processing apparatus operates as a commanding apparatus which gives a command to the external apparatus when it is determined that the operating device is connected to the audiovisual processing apparatus.

8. The audiovisual processing apparatus according to claim 7, **characterized in that** the grouping unit and the external resource manager are activated before the commanding unit gives the command.

9. An audiovisual processing method for use in an audiovisual processing system including audiovisual processing apparatuses (100) configured to record and edit audiovisual data which includes at least one of audio data and image data, and a connection network (4, 200, 400) configured to connect the audiovisual processing apparatuses, the method **characterized by** comprising:
determining whether or not the at least one audiovisual processing apparatus operates as a commanding apparatus which gives a command to at least one external apparatus including at least one of the audiovisual processing apparatuses;
determining whether or not the external apparatus is communicable with the commanding apparatus via the connection network;
grouping the external apparatus together with the commanding apparatus when it is determined that the external apparatus is communicable with the commanding apparatus; and
giving a command from the commanding apparatus to the external apparatus in response to an operation input made by a user,
wherein the external apparatus performs audiovisual processing corresponding to the command from the commanding apparatus.

10. A computer-readable program recording medium for use with an audiovisual processing system including audiovisual processing apparatuses (100) configured to record and edit audiovisual data which includes at least one of audio data and image data and a connection network (4, 200, 400) configured to connect the audiovisual processing apparatuses, each of the audiovisual apparatuses **characterized by** comprising an own device (2, 3, 5, 31, 40, 61) configured to process internal audiovisual data and an external resource table (93) configured to store identification information of at least one external apparatus including at least one of the audiovisual processing apparatuses, the recording medium containing program instructions for causing the audiovisual processing apparatus to:
determine whether or not the external apparatus is communicable with the audiovisual processing apparatus via the connection network
group the external apparatus together with the audiovisual processing apparatus when it is determined that the external apparatus is communicable with the audiovisual processing apparatus,
give a command to the external apparatus in response to an operation input made by a user,
obtain information on at least one external device and store the obtained information in the external resource table, the external device processing audiovisual data and being controlled by the external apparatus,
control sending and receiving data to and from the external device in response to the command,
attach control information for controlling the external device to the internal audiovisual data when the internal audiovisual data is controlled to be sent to the external device,
separate control information from external audiovisual data when the external audiovisual data sent from the external device is received, and
provide the external audiovisual data for the own device.
